# EUROPÄISCHE PATENTSCHRIFT

(11) **EP 0 303 093 B1**
(45) Veröffentlichungstag und Bekanntmachung des Hinweises auf die Patenterteilung: **26.05.1993**
(21) Anmeldenummer: 88111980.4
(22) Anmeldetag: 25.07.1988
(51) Int. Cl.: H04Q 11/04, H04L 12/28, H04Q 3/545, H04Q 3/58

(54) **Kommunikationssystem mit einem als Zubringerkommunikationsnetz vorgesehen ringförmigen Netz im Teilnehmeranschlussbereich einer digitalen Vermittlungseinrichtung**
Communication system provided with a connexion network constructed as a ring network in the subscriber area of a digital switching exchange
Système de communication pourvu d'un réseau de raccordement en forme de boucle au niveau du rattachement des abonnés d'un central téléphonique digital

(30) Priorität: 11.08.1987 DE 3726716
(43) Veröffentlichungstag der Anmeldung: 15.02.1989
(73) Patentinhaber: SIEMENS AKTIENGESELLSCHAFT, 80333 München (DE)
(72) Erfinder: Kuhlmann, Klaus, Dipl.-Ing., D-8000 München 5 (DE); Leibe, Gerhard, Dipl.-Ing., D-8000 München 70 (DE); Weiss, Albert, Dipl.-Ing. (FH), D-8000 München 90 (DE)

(56) Entgegenhaltungen:
- NACHRICHTENTECHNISCHE ZEITSCHRIFT, Band 36, Heft 8, August 1983, Seiten 512-516; H. MAY et al.: "Mikrorechnergesteuerte Reihenanlage mit Vierdrahtanschluss"
- GLOBECOM'84, Band 2, 26.-29. November 1984, Seiten 21.1.1 - 21.1.5, Atlanta, US; K. MAEBARA et al.: "Protocol Conversion for Integrated Voice/Data Digital PBX"
- ICC'86, Band 2, 22.-25. Juni 1986, Seiten 35.4.1 - 35.4.4, Toronto, CA; L. WOZICH et al.: "A Distributed Architecture Line Concentrator"
- ISS 1984, Band 2, 7.-11. Mai 1984, Seiten 42B.3.1 - 42B.3.6, Florence, IT; T. TAKEUCHI et al.: "Synchronous Composite Packet Switching for ISDN Switching System Architecture"

## Beschreibung

Die Erfindung betrifft ein Kommunikationssystem gemäß dem Oberbegriff des Anspruches 1.

In privaten Kommunikationssystemen werden überwiegend digitale, rechnergesteuerte Vermittlungseinrichtungen eingesetzt. Für kleine bis mittlere Vermittlungseinrichtungen - ca. 10 bis 500 Teilnehmeranschlüsse - ist die zentrale Steuereinrichtung mittels eines Mikroprozessorsystems realisierbar. Diese zentrale Steuereinrichtung kommuniziert meist direkt mit einer Koppelfeldeinrichtung und, um die zentrale Steuerung dynamisch zu entlasten, über eine oder mehrere Kommunikationsuntersteuerungen mit mehreren Teilnehmeranschlußeinrichtungen. An diese Teilnehmeranschlußeinrichtungen, die in speziellen Aufnahmeeinrichtungen untergebracht sind, werden über Anschlußleitungen mittels geeigneter Übertragungsverfahren die Teilnehmereinrichtungen herangeführt. In den Teilnehmeranschlußeinrichtungen wird mittels geeigneter Hardware- bzw. Softwareeinrichtungen bzw. -prozeduren die Signalisierung sowohl mit der Teilnehmereinrichtung als auch mit der zentralen Steuerung durchgeführt. Die Teilnehmeranschlußeinrichtung sammelt hierfür die von der Teilnehmereinrichtung empfangenen Signalisierungsinformationen und übermittelt diese nach einer geeigneten Aufbereitung zur weiteren Bearbeitung an die zentrale Steuereinrichtung. Analog hierzu findet die Kommunikation in entgegengesetzter Übermittlungsrichtung statt. Die zentrale Steuerung führt im wesentlichen die vermittlungstechnischen Aufgaben - z. B. Ermittlung der Koppelfeldeinstellung aufgrund der gerufenen Teilnehmerrufnummer - durch. Betrieben, verwaltet und überwacht werden die Vermittlungseinrichtung und die Systemkomponenten im Teilnehmeranschlußbereich mit einem Betriebsterminal, das über einen speziellen Anschluß oder über einen Teilnehmeranschluß mit der Vermittlungseinrichtung - im wesentlichen mit den Steuerungen der Vermittlungseinrichtung - kommuniziert. Derartige Betriebs- bzw. Überwachungsfunktionen sind beispielsweise das Ändern teilnehmerspezifischer Daten in der Datenbasis, das Laden der Speicher der implementierten Prozessorsysteme mit semipermanenten bzw. permanenten Daten bei der Inbetriebnahme ausgefallener Systemkomponenten oder zur Aktualisierung, die Anzeige von Fehlern am Betriebsterminal und der automatische Start von Fehlerlokalisierungs- und Analyseprozeduren.

Seit geraumer Zeit werden in zunehmendem Maße neben den herkömmlichen privaten Nebenstellenanlagennetzen lokale Netze, sogenannte "Local Area Networks", eingesetzt. Meist stellen diese lokalen Netze eigenständige Kommunikationsnetze dar; beispielsweise kommunizieren eine Vielzahl von Terminals sowohl untereinander als auch mit einer zentralen Rechnereinrichtung. Mit steigenden Übermittlungsgeschwindigkeiten der Informationen werden mehr und mehr ringförmige lokale Netze bevorzugt. Hierzu ist im Gegensatz zu Busnetzen zwischen den einzelnen Teilnehmereinrichtungen jeweils eine Punkt-zu-Punkt-Verbindung angeordnet. Dies bedeutet, daß Übertragungsmedien - z. B. Lichtwellenleiterübertragungssysteme - eingesetzt werden können, über die Informationen mit sehr hohen Übertragungsgeschwindigkeiten, z. B. 100 MBit/s, übertragbar sind. Außerdem findet, um sich an die Bedingungen von paket- und durchschalteorientiert übermittelnden Teilnehmereinrichtungen anzupassen, eine Aufteilung der Übermittlungskapazität eines ringförmigen Netzes statt. So kann beispielsweise ein Durchschaltebereich definiert werden, in dem eine bestimmte Teilkapazität - z. B. 64 KBit/s - einem Durchschalteteilnehmer für die Dauer einer Verbindung zugeteilt ist. Analog hierzu kann ein Paketbereich für paketübermittelnde Teilnehmer definiert werden. Diese Zuteilungen werden jeweils in einer den Zugriff auf das ringförmige Netz durchführenden Ringzugriffseinrichtung in einem hierfür vorgesehenen Speicher bzw. Register vermerkt.

Bei Anschluß zusätzlicher Teilnehmereinrichtungen an eine private Vermittlungseinrichtung, die örtlich im Bereich eines ringförmigen Netzes stationiert werden sollen, erscheint es sinnvoll, das ringförmige Netz als Zubringernetz zu nutzen, wobei dann die private Vermittlungseinrichtung mit dem ringförmigen Ringnetz zu verbinden ist.

Die Aufgabe der Erfindung besteht darin, ein ringförmiges Netz unter Beibehaltung möglichst vieler Soft- und Hardwarekomponenten der vorhandenen Netze und mit möglichst wenig zusätzlich zu entwickelnden Einrichtungen und Verfahren als Zubringernetz in das Netz einer Vermittlungseinrichtung mit einzubeziehen.

Die Aufgabe wird ausgehend von dem eingangs im Oberbegriff des Anspruchs 1 definierten Kommunikationssystem durch die kennzeichnenden Merkmale des Anspruches 1 gelöst.

Als besonders vorteilhaft ist beim erfindungsgemäßen Kommunikationssystem das Beibehalten aller Systemkomponenten der Vermittlungseinrichtung und des ringförmigen Netzes anzusehen. Die Teilnehmeranschlußeinrichtungen werden in der Aufnahmeeinrichtung lediglich durch die Gatewayeinrichtung ersetzt, wobei die Teilnehmeranschlußeinrichtungen unverändert in einer externen Aufnahmeeinrichtung eingesetzt werden. Auch die Ringnetzzugriffseinrichtungen des ringförmigen Netzes - üblicherweise auf einer oder mehreren Baugruppen realisiert - können unverändert weiterbenutzt werden und sind in der Gateway- und externen Aufnahmeeinrichtung untergebracht. Zusätzlich sind die beiden Umsetzeinrichtungen und die externe Aufnahmeeinrichtung hinsichtlich Hard- und Software neu zu entwickeln. Inwieweit die Betriebs-, Wartungs- und Überwachungs-Software der vorhandenen Systemkomponenten des ringförmigen Netzes und des Vermittlungseinrichtungsnetzes weiterverwendet werden können, hängt im wesentlichen vom vorgesehenen Betriebs-, Verwaltungs- und Überwachungskonzept für das vollständige Kommunikationssystem und von dem Verhalten der Gatewayeinrichtung gegenüber der Vermittlungseinrichtung ab. Die Auswahl, welche Systembestandteile verwalten, betreiben und überwachen, ist zu Beginn einer Entwicklung zu definieren und wird durch die Faktoren, wie Entwicklungsaufwand, Bedienungskomfort, einheitliche Überwachungsphilosophie, Kundenaufforderungen, usw., bestimmt.

In den vorteilhaften Weiterbildungen der Erfindung nach den Ansprüchen 2 bis 6 sind sowohl drei wesentliche Varianten hinsichtlich der Aufteilung des Betriebes, Verwaltens und Überwachens auf die einzelnen Netzkomponenten als auch zwei mögliche Strukturstellungen der Gatewayeinrichtung gegenüber der Vermittlungseinrichtung bzw. der Anpassungseinrichtung gegenüber den Teilnehmeranschlußeinrichtungen aufgezeigt.

Nach der vorteilhaften Weiterbildung gemäß Patentanspruch 2 werden alle Systemkomponenten des ringförmigen Netzes und des Vermittlungseinrichtungsnetzes zentral von der Vermittlungseinrichtung betrieben, verwaltet und überwacht. Dies stellt die entwicklungsaufwendigste Software-Realisierung dar, bietet jedoch hinsichtlich Bedienung - nur ein zentrales Bedienterminal eine Mensch-Maschine-Sprache (MMI) -, Verwaltung - Wissen über komplette Netzkonfiguration vorhanden - und Überwachung - zentrale Fehleranzeige, zentrale Fehlerlokalisierung und -analyse sowie Wiederinbetriebnahme - den größtmöglichen Komfort für einen Betreiber eines derartigen Kommunikationssystems.

Nach der weiteren vorteilhaften Weiterbildung gemäß Patentanspruch 3 werden alle Netzkomponenten des ringförmigen Netzes sowie die Gateway-Anpassungs- und externen Teilnehmereinrichtungen in der Gatewayeinrichtung und die Vermittlungseinrichtung in derselben betrieben, verwaltet und überwacht. Hierbei kann die Software für das Betreiben, Verwalten und Überwachen des ringförmigen Netzes mit einem bestimmten Implementierungsaufwand annähernd vollständig in die Gatewayeinrichtung übernommen werden. Zusätzlich hierzu muß die Software für das Betreiben, Verwalten und Überwachen der Umsetzeinrichtungen und der in den externen Aufnahmeeinrichtungen untergebrachten Teilnehmeranschlußeinrichtungen entwickelt und eingebracht werden. Insbesondere sind dies bekannte Verfahren, wie z. B. Laden der semipermanenten bzw. permanenten Daten in die Speicher der peripheren Prozessorsysteme oder Fehlererkennungs-, Anzeige- und Lokalisierungsverfahren in den zusätzlichen Systemkomponenten. Diese Variante beinhaltet jeweils für sich abgeschlossene Teilnetze, die jeweils betrieben, verwaltet und überwacht werden. Es sind somit keine Funktionsüberlagerungen bzw. Fehlerfortpflanzungen möglich, was jedoch nur mit einem erhöhten Aufwand zu erreichen ist.

Die vorteilhafte Weiterbildung der Erfindung gemäß Anspruch 4 zeigt die dritte Variante hinsichtlich Betreiben, Verwalten und Überwachen der beiden Kommunikationsnetze. Hierbei wird das ringförmige Netz - einschließlich Ringkoppel- und Ringnetzzugriffseinrichtungen - von der Gatewayeinrichtung betrieben, verwaltet und überwacht, d. h. die bereits bestehende und hierfür vorgesehene Software kann - bis auf einen bestimmten Implementierungsaufwand - unverändert in die Gatewayeinrichtung übernommen werden. Von der Vermittlungseinrichtung aus werden alle Systemkomponenten, die auch ohne Einfügen eines ringförmigen Netzes erforderlich sind und zusätzlich die beiden Umsetzeinrichtungen, betrieben, verwaltet und überwacht, d. h. die bestehende Software muß um die Belange der beiden Umsetzeinrichtungen erweitert werden. Diese Variante ist mit dem geringsten zusätzlichen Softwareaufwand zu realisieren. Nachteilig wirkt sich hierbei das Betreiben, Verwalten und Überwachen über zwei unabhängige Betriebsterminals mit gegebenenfalls unterschiedlichen Mensch-Maschine-Sprachen (MMI) aus. Des weiteren wird bei Netzstörungen der jeweils anderen Überwachungseinrichtung nur ganz allgemein das Vorliegen einer Störung angezeigt, jedoch werden keine gezielten Fehlerlokalisierungs- und Analyseverfahren im jeweils anderen Netz eingeleitet bzw. durchgeführt. Diese Variante stellt somit die entwicklungsaufwandsärmste, jedoch für einen Netzbetreiber unkomfortabelste Lösung dar.

Nach den weiteren vorteilhaften Weiterbildungen der Erfindung gemäß Patentanspruch 5 und 6 repräsentiert die Gatewayeinrichtung vermittlungsseitig hinsichtlich Adressierung, Signalisierung und physikalischer Schnittstellen entweder eine Teilnehmeranschlußeinrichtung mit n x m angeschlossenen Teilnehmereinrichtungen oder n Teilnehmeranschlußeinrichtungen mit jeweils m angeschlossenen Teilnehmereinrichtungen. In den Anpassungseinrichtungen wird teilnehmeranschlußeinrichtungsseitig bei beiden Varianten eine Verteileinrichtung - indirekt die Kommunikationssteuerung - der Vermittlungseinrichtung simuliert. Bei der Variante gemäß Anspruch 6 ist keine Softwareänderung hinsichtlich der Adressierung erforderlich, da die Gatewayeinrichtung sich so verhält, als wenn n Teilnehmeranschlußeinrichtungen angeschlossen wären, d. h. sie kann von der Vermittlungseinrichtung unter den gleichen Adressen erreicht werden, die bei Anschluß von n Teilnehmeranschlußeinrichtungen vorgesehen wären. Die vorteilhaftere Methode - siehe Anspruch 5 - erfordert eine Softwareänderung hinsichtlich der Adressierung der Vermittlungseinrichtung. Der hierdurch zu erreichende Vorteil besteht darin, daß direkt die Teilnehmereinrichtungsadresse übermittelt werden kann, ohne noch speziell die entsprechende Teilnehmeranschlußeinrichtung adressieren zu müssen.

Nach einer weiteren vorteilhaften Weiterbildung der Erfindung gemäß Patentanspruch 7 werden die Nachrichteninformationen im Durchschalteinformationsbereich und die Signalisierungsinformationen im Paketinformationsbereich der Ringinformationsübermittlungskapazität übermittelt. Diese Aufteilung ist bei paketorientierter Signalisierungsinformationsübertragung - z. B. bei ISDN-Teilnehmersignalisierung - von Vorteil, da sonst im Durchschalteinformationsbereich ständig ein Signalisierungskanal reserviert werden muß. Einzelheiten zu dieser Ausgestaltung der Erfindung können der US-Patentschrift Nr. US-A- 4 661 952 entnommen werden.

Im folgenden wird ein Ausführungsbeispiel der Erfindung anhand eines Blockschaltbildes näher erläutert. Das Blockschaltbild zeigt die zur Erläuterung notwendigen Systemkomponenten eines Kommunikationssystems, das aus einer Vermittlungseinrichtung VE, einem ringförmigen Netz RN und einer externen Aufnahmeeinrichtung AEE gebildet ist. Die Vermittlungseinrichtung VE enthält eine Koppelfeldeinrichtung SWE, eine Zentralsteuerung ZST, mindestens eine Kommunikationssteuerung IOP sowie mindestens eine Aufnahmeeinrichtung AE. Zentralsteuerung ZST, Koppelfeldeinrichtung SWE und die Kommunikationssteuerungen IOP kommunizieren über ein erstes lokales Bussystem LB1. Eine Kommunikationssteuerung IOP, die die Zentralsteuerung ZST dynamisch entlastet, ist über ein zweites lokales Bussystem LB2 und über jeweils in den Aufnahmeeinrichtungen AE angeordnete Verteileinrichtungen VTE mit einer bestimmten Anzahl n von Teilnehmeranschlußeinrichtungen SLM verbunden. In der Verteileinrichtung VTE wird jeweils das zweite lokale Bussystem LB2 parallel an die n - z. B. sechs - Teilnehmeranschlußeinrichtungen SLM geführt. Die Verteileinrichtung VTE kann beispielsweise in Form einer Rückwandverdrahtung einer Aufnahmeeinrichtung AE realisiert sein. An jede der Teilnehmeranschlußeinrichtungen SLM können über Anschlußleitungen ASL mehrere - beispielsweise acht - Teilnehmereinrichtungen SE angeschlossen werden. Des weiteren ist jede Teilnehmeranschlußeinrichtung SLM über die Verteileinrichtung VTE mit zwei, eine Übermittlungsgeschwindigkeit von 2,048 MBit/s aufweisende und PCM-orientierte Verbindungen an die Koppelfeldeinrichtung SWE angeschlossen. In der Teilnehmeranschlußeinrichtung SLM werden die von bzw. zur Teilnehmereinrichtung SE zu übermittelnden Signalisierungsinformationen aufgesammelt, aufbereitet und zur Kommunikationssteuerung IOP bzw. Teilnehmereinrichtung SE über das zweite lokale Bussystem LB2 bzw. über die Anschlußleitung ASL übermittelt. Aus den übermittelten Signalisierungsinformationen - beispielsweise der Rufnummer - ermittelt die Zentralsteuerung ZST eine hierfür geeignete Einstellinformation für die Koppelfeldeinrichtung SWE und leitet diese über das erste lokale Bussystem LB1 an die Koppelfeldeinrichtung SWE weiter. Die über die Teilnehmeranschlußeinrichtungen SLM an die Koppelfeldeinrichtung SWE herangeführten Nachrichtenkanäle - in ISDN-Netzen die B-Kanäle - werden in der Koppelfeldeinrichtung SWE entsprechend der gewählten Rufnummern untereinander verbunden und nach entsprechender Mitteilung der Zentralsteuerung ZST an die Teilnehmeranschlußeinrichtungen SLM zu den Teilnehmereinrichtungen SE durchgeschaltet. Für das erste und zweite lokale Bussystem LB1, LB2 sind, um eine Anpassung an die ISDN-Signalisierungsprozeduren zu erreichen, paketorientierte Übermittlungsverfahren - beispielsweise HDLC-Übermittlungsverfahren - vorgesehen. Ein derartig ausgestaltetes Kommunikationssystem ist auch aus einer Druckschrift von Siemens, "ISDN in the Office", 'Special Issue of telcom report and Siemens Magazine COM' bekannt.

In einer der mit einer Verteileinrichtung VTE versehenen Aufnahmeeinrichtungen AE - beispielsweise AE1 - ist anstelle der Teilnehmeranschlußeinrichtungen SLM eine Gatewayeinrichtung GWE angeordnet. Diese Gatewayeinrichtung GWE ist aus einer Umsetzeinrichtung UE-GW und einer Ringnetzzugriffseinrichtung RN-ZE gebildet. Die Umsetzeinrichtung UE-GW ist über einen der n Verteileinrichtungsanschlüsse sowohl mit der Kommunikationssteuerung IOP - beispielsweise Kommunikationssteuerung IOP1 - als auch mit zwei 2,048 MBit/s-Eingängen - beispielsweise Eingang 3 und 4 - der Koppelfeldeinrichtung SWE verbunden. In der Umsetzeinrichtung UE-GW werden die in der Vermittlungseinrichtung VE verwendeten Signalisierungs- und Nachrichtenübermittlungsprozeduren an die eingangs geforderten Prozeduren der Ringnetzzugriffseinrichtung RN-ZE angepaßt. In dieser Ringnetzzugriffseinrichtung RN-ZE wird der Zugriff einer Gatewayeinrichtung GWE auf ein ringförmiges Netz RN gesteuert. Dieser Zugriff erfolgt beispielsweise nach einem Zugriffsprotokoll gemäß ANSI/IEEE-Standard-Protokoll 802.5. Die Ringnetzzugriffseinrichtung RN-ZE ist über eine Stichleitung SL mit einer Ringkoppeleinrichtung RCB verbunden, wobei die Ringkoppeleinrichtung RCB auch in der Gatewayeinrichtung GWE integriert sein kann. Die Ringkoppeleinrichtung RCB ist in die Ringleitung RL eines ringförmigen Netzes eingefügt. Die Ringleitung RL kann beispielhaft mittels optischer Lichtwellenleiter realisiert sein. Hierbei ist die übermittlungsrichtungsgemäß ankommende Ringleitung RL mit einer optischen Empfängereinrichtung und die abgehende Ringleitung RL mit einer optischen Sendeeinrichtung auszustatten. Mehrere derartiger Ringkoppeleinrichtungen RCB sind über entsprechend angeordnete Ringleitungen RL - ein ringförmiges Netz RN bildend - untereinander verbunden. An eine der weiteren Ringkoppeleinrichtungen RCB ist über eine Stichleitung SL eine externe Aufnahmeeinrichtung AEE angeschlossen. In dieser externen Aufnahmeeinrichtung AEE sind eine Anpassungseinrichtung APE und mehrere an die Anpassungseinrichtung APE anschließbare Teilnehmeranschlußeinrichtungen SLM angeordnet. Die Anpassungseinrichtung APE wird wiederum aus einer Ringnetzzugriffseinrichtung RN-ZE und einer externen Umsetzeinrichtung UEE gebildet. Die Ringnetzzugriffssteuerung RN-ZE steuert wiederum den Zugriff auf das ringförmige Netz RN und die externe Umsetzeinrichtung UEE paßt ebenfalls die Signalisierungs- und Übermittlungsprozeduren an die Eingangsbedingungen der Teilnehmeranschlußeinrichtung SLM an. Die Teilnehmeranschlußeinrichtungen SLM sind über entsprechend angeordnete Anschlußleitungen ASL mit den Teilnehmereinrichtungen SE verbunden. Die Teilnehmereinrichtungen SE können beispielsweise durch ISDN-Teilnehmereinrichtungen, wie multifunktionale Terminals, realisiert sein. Anstelle der Teilnehmereinrichtungen SE können im Sinne eines Anschlusses an ein öffentliches oder ein weiteres privates Fernmeldenetz entsprechende Verbindungsleitungen angeschlossen werden. Ein ringförmiges Netz mit vorhergehend erläuterten Eigenschaften ist auch aus der US-Patentschrift Nr. US-A- 4 661 952 bekannt.

Die Umsetzeinrichtung UE-GW in der Gatewayeinrichtung GWE kann sich gegenüber einer Kommunikationssteuerung IOP entweder wie n Teilnehmeranschlußeinrichtungen SLM mit jeweils m Teilnehmereinrichtungs-Anschlüssen oder wie eine einzige Teilnehmeranschlußeinrichtung SLM mit n x m Teilnehmereinrichtungs-Anschlüssen verhalten. Repräsentiert die Umsetzeinrichtung UE-GW n Teilnehmeranschlußeinrichtungen SLM - dies sei in dem Ausführungsbeispiel angenommen, so kann die Kommunikationssteuerung IOP die Gatewayeinrichtung GWE wie Teilnehmeranschlußeinrichtungen SLM adressieren, was bedeutet, daß keine spezielle Adressierungs-Software in der Kommunikationssteuerung IOP erforderlich ist. Für die Umsetzeinrichtung UE-GW ist jedoch eine spezielle Adressenerkennungs-Software zu entwickeln. Verhält sich die Umsetzeinrichtung UE-GW wie eine einzige Teilnehmeranschlußeinrichtung SLM mit n x m Teilnehmereinrichtungs-Anschlüssen, so entfällt zwar die spezielle Adressenerkennungs-Software in der Umsetzeinrichtung UE-GW, jedoch muß in der Kommunikationssteuerung IOP die Software für das Bilden der Adressen beim Ansteuern der Gatewayeinrichtung GWE ausgeblendet und damit abgeändert werden.

Der Betrieb, das Verwalten und das Überwachen des ringförmigen Netzes RN und des Vermittlungseinrichtungsnetzes kann entweder zentral von der Vermittlungseinrichtung VE, jeweils für zusammenhängende Netzteile oder für jedes Netz unabhängig voneinander erfolgen. Welches Konzept zu realisieren ist, hängt im wesentlichen von den Vorgaben der Netzbetreiber und vom Entwicklungsaufwand für das jeweilige Konzept ab. Bei als Zubringernetzen eingefügten ringförmigen Netze RN im Teilnehmeranschlußbereich einer Vermittlungseinrichtung VE scheint es sinnvoll, beide Netze unabhängig voneinander zu betreiben, zu verwalten und zu überwachen, da das eingefügte ringförmige Netz RN und die Gateway- und Anpassungseinrichtung GWE, APE für die Vermittlungseinrichtung VE als eine oder mehrere hintereinander geschaltete Leitungsabschnitte anzusehen ist. Somit können beide Netze mit den vorhandenen Fehlererkennungsmechanismen den Ausfall des jeweils anderen Netzes feststellen und die entsprechenden Außerbetriebnahmen bzw. Inbetriebnahmen im jeweils eigenen Netz einleiten und ausführen.

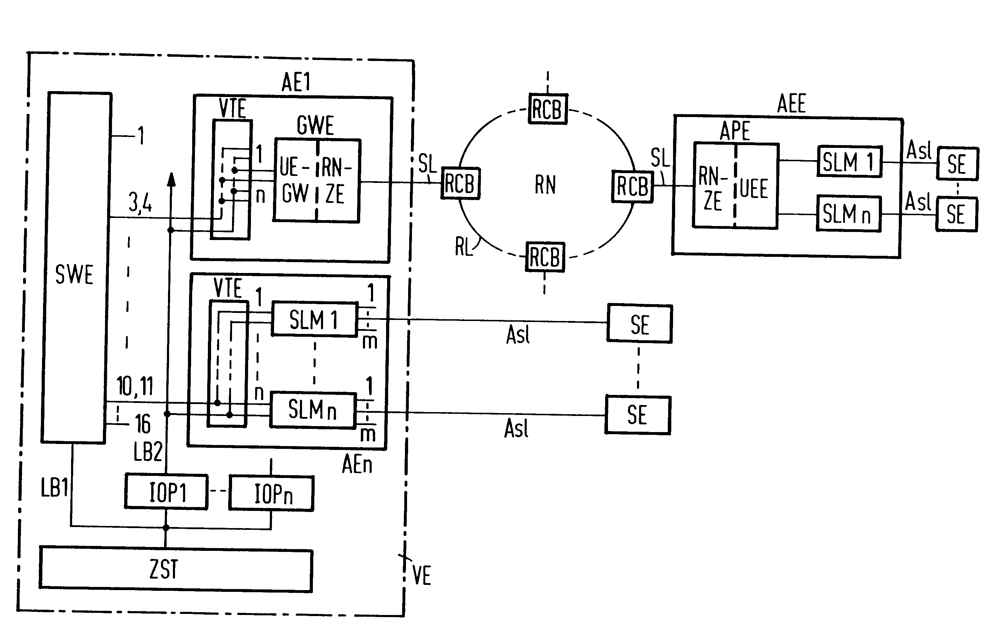

## Patentansprüche

1. Kommunikationssystem mit einer digitalen Vermittlungseinrichtung (VE)
- die mit einem lokalen Bussystem (LB1) ausgestattet ist, über das eine zentrale Steuereinrichtung (ZST) mit einer als Zeitlagenvielfach realisierten Koppelfeldeinrichtung (SWE) und mit mindestens einer Kommunikationssteuerung (IOP) kommuniziert,
- und die mit einem weiteren lokalen Bussystem (LB2) ausgestattet ist, über das die Kommunikationssteuerung mit in Aufnahmeeinrichtungen (AE) angeordneten Teilnehmeranschlußeinrichtungen kommuniziert,
- und die in der Aufnahmeeinrichtung (AE) eine Verteileinrichtung (VTE) aufweist, die sowohl das von der Kommunikationssteuerung herangeführte Bussystem als auch mindestens einen von Anschlüssen der Koppelfeldeinrichtung (SWE) herangeführten PCM-orientierten Nachrichtenkanal auf jeweils n Teilnehmeranschlußeinrichtungsanschlüsse parallel verteilt,
- und an deren Teilnehmeranschlußeinrichtungen (SLM) jeweils m Teilnehmereinrichtungen über analoge oder digitale Übertragungsverfahren aufweisende Anschlußleitungen anschließbar sind,
und mit einem die Informationen paketweise übermittelnden ringförmigen Netz (RN),
- das als Zubringernetz in den Teilnehmeranschlußbereich der Vermittlungseinrichtung eingefügt ist,
- und in dessen Ringleitung (RL) mehrere Ringkoppeleinrichtungen (RCB) eingefügt sind, an die jeweils über eine Stichleitung jeweils eine Ringnetzzugriffseinrichtung (RN-ZE) angeschlossen ist,
- und an dessen Ringnetzzugriffseinrichtungen (RN-ZE) jeweils mindestens eine Ringnetzteilnehmereinrichtung anschließbar ist,
und mit Hardwareeinrichtungen und Softwareprozeduren in den Systemkomponenten beider Kommunikationsnetze, mittels derer das Kommunikationssystem betrieben, verwaltet und überwacht wird,
**dadurch gekennzeichnet,**
- daß in einer Aufnahmeeinrichtung (AE) anstelle der Teilnehmeranschlußeinrichtungen (SLM) eine aus einer Umsetzeinrichtung (UE-GW) und einer Ringnetzzugriffseinrichtung (RN-ZE) gebildete und das Vermittlungseinrichtungsnetz mit dem ringförmigen Netz (RN) koppelnde Gatewayeinrichtung (GWE) angeordnet ist,
- daß die Gatewayeinrichtung (GWE) über die die Signalisierungs- und Nachrichteninformationen an die Teilnehmeranschlußeinrichtungsanschluß-Prozeduren anpassende Umsetzeinrichtung (UE-GW) mit der Vermittlungseinrichtung (VE) verbunden ist,
- daß die Gatewayeinrichtung (GWE) über die die Signalisierungs- und Nachrichteninformationen an die Ringnetzübermittlungs-Prozeduren anpassende Ringnetzzugriffseinrichtung (RN-ZE) mit der Ringkoppeleinrichtung (RCB) verbunden ist,
- daß im ringförmigen Netz (RN) zumindest eine weitere Ringkoppeleinrichtung (RCB) angeordnet ist, der jeweils über eine Stichleitung (SL) eine externe, ebenfalls mit einer Netzzugriffseinrichtung (RN-ZE) einer externen Umsetzeinrichtung (UEE) und maximal n Teilnehmeranschlußeinrichtungen (SLM) ausgestattete Aufnahmeeinrichtung (AEE) zugeordnet ist,
- daß an die Teilnehmeranschlußeinrichtungen (SLM) über Anschlußleitungen externe, mit den Teilnehmereinrichtungen (SE) des Vermittlungseinrichtungsnetzes verbindbare Teilnehmereinrichtungen (SE) angeschlossen sind und
- daß das ringförmige Netz (RN) und das Vermittlungseinrichtungsnetz von der Vermittlungseinrichtung (VE) und/oder von der Gatewayeinrichtung (GWE) betrieben, verwaltet und überwacht wird.

2. Kommunikationssystem nach Anspruch 1,
**dadurch gekennzeichnet,**
daß alle Systemkomponenten des ringförmigen Netzes (RN) und des Vermittlungseinrichtungsnetzes zentral von der Vermittlungseinrichtung betrieben, verwaltet und überwacht werden.

3. Kommunikationssystem nach Anspruch 1,
**dadurch gekennzeichnet,**
daß in der Gatewayeinrichtung (GWE) alle Netzkomponenten des ringförmigen Netzes (RN) sowie die Gateway- (GWE), Anpassungs- (APE) und externen Teilnehmeranschlußeinrichtungen (SLM) und die Vermittlungseinrichtung (VE) von derselben betrieben, verwaltet und überwacht werden.

4. Kommunikationssystem nach Anspruch 1,
**dadurch gekennzeichnet,**
daß die Ringkoppeleinrichtungen (RCB) und die Ringnetzzugriffseinrichtungen (RN-ZE) in der Gatewayeinrichtung (GWE) und die Umsetzeinrichtungen (UE-GW, UEE) sowie die externen Teilnehmeranschlußeinrichtungen (SLM) und die Systemkomponenten des Vermittlungseinrichtungsnetzes von der Vermittlungseinrichtung (VE) betrieben, verwaltet und überwacht werden.

5. Kommunikationssystem nach einem der vorhergehenden Ansprüche,
**dadurch gekennzeichnet,**
daß die Gatewayeinrichtung (GWE) vermittlungseinrichtungsseitig hinsichtlich Adressierungs-, Signalisierungs- und physikalischer Schnittstellen eine Teilnehmeranschlußeinrichtung (SLM) mit n x m Teilnehmereinrichtungsanschlüssen repräsentiert.

6. Kommunikationssystem nach Anspruch 1, 2, 3 oder 4,
**dadurch gekennzeichnet,**
daß die Gatewayeinrichtung (GWE) vermittlungseinrichtungsseitig hinsichtlich der Adressierung, Signalisierung und physikalischer Schnittstellen n Teilnehmeranschlußeinrichtungen (SLM) mit jeweils m angeschlossenen Teilnehmereinrichtungen (SE) und daß die Anpassungseinrichtung (APE) teilnehmeranschlußeinrichtungsseitig eine Verteileinrichtung (VTE) der Vermittlungseinrichtung (VE) repräsentiert.

7. Kommunikationssystem nach Anspruch 1,
**dadurch gekennzeichnet,**
daß die Informationsübermittlungskapazität der ringförmigen Netze (RN) in einen Durchschalte- und Paket-Informationsbereich unterteilbar ist und daß die zwischen Teilnehmereinrichtung (SE) und Vermittlungseinrichtung (VE) zu übermittelnden Nachrichteninformationen im Durchschalte-Informationsbereich und die Signalisierungsinformationen im Paket-Informationsbereich übermittelt werden.

## Claims

1. Communications system having a digital switching device (VE) which is equipped with a local bus system (LB1), via which a central control device (ZST) communicates with a switching network device (SWE) realised as a time division multiplexer and with at least one communication controller (IOP), and which is equipped with a further local bus system (LB2), via which the communication controller communicates with subscriber connection devices arranged in sapporting devices (AE), and which has in the sapporting device (AE) a distribution device (VTE) which distributes both the bus system running up from the communication controller and at least one PCM-oriented message channel running up from terminals of the switching network device (SWE) to respectively n subscriber connection device terminals in parallel, and to whose subscriber connection devices (SLM) respectively m subscriber devices can be connected via subscriber lines having analog or digital transmission techniques, and having a ring-shaped network (RN) which transmits the information in packets, is inserted as an offering network into the subscriber connection region of the switching device, and into whose ring line (RL) there is inserted a plurality of ring coupling devices (RCB) to which respectively one ring-network access devices (RN-ZE) is connected respectively via a spur line, and to whose ring-network access device (RN-ZE) respectively at least one ring-network subscriber device can be connected, and having hardware devices and software procedures in the system components of both communication networks, by means of which the communications system is operated, administered and monitored, characterised in that instead of the subscriber connection devices (SLM) there is arranged in an sapporting device (AE) a gateway device (GWE) which is formed from a converting device (UE-GW) and a ring-network access device (RN-ZE) and couples the switching device network to the ring-shaped network (RN), in that the gateway device (GWE) is connected to the switching device (VE) via the converting device (UE-GW), which matches the signalling and message information to the subscriber connection device connecting procedures, in that the gateway device (GWE) is connected to the ring coupling device (RCB) via the ring-network access device (RN-ZE), which matches the signalling and message information to the ring-network transmitting procedures, in that there is arranged in the ring-shaped network (RN) at least one further ring coupling device (RCB) which is respectively assigned via a spur line (SL) an external sapporting device (AEE) which is likewise equipped with a network access device (RN-ZE) of an external converting device (UEE) and a maximum of n subscriber connection devices (SLM), in that external subscriber devices (SE) which can be connected to the subscriber devices (SE) of the switching device network are connected to the subscriber connection devices (SLM) via subscriber lines, and in that the ring-shaped network (RN) and the switching device network are operated, administered and monitored by the switching device (VE) and/or by the gateway device

2. Communications system according to Claim 1, characterised in that all the system components of the ring-shaped network (RN) and of the switching device network are operated, administered and monitored centrally by the switching device.

3. Communications system according to Claim 1, characterised in that in the gateway device (GWE) all the network components of the ring-shaped network (RN) and the gateway (GWE), matching (APE) and external subscriber connection devices (SLM) and the switching device (VE) are operated, administered and monitored by the latter.

4. Communications system according to Claim 1, characterised in that the ring coupling devices (RCB) and the ring-network access devices (RN-ZE) in the gateway device (GWE) and the converting devices (UE-GW, UEE) and the external subscriber connection devices (SLM) and the system components of the switching device network are operated, administered and monitored by the switching device (VE).

5. Communications system according to one of the preceding claims, characterised in that as regards addressing, signalling and physical interfaces, on the switching device side the gateway device (GWE) represents a subscriber connection device (SLM) having n × m subscriber device terminals.

6. Communications system according to Claim 1, 2, 3 or 4, characterised in that as regards the addressing, signalling and physical interfaces, on the switching device side the gateway device (GWE) represents n subscriber connection devices (SLM) each having m connected subscriber devices (SE), and in that on the subscriber connection device side the matching device (APE) represents a distribution device (VTE) of the switching device (VE).

7. Communications system according to Claim 1, characterised in that the information transmission capacity of the ring-shaped networks (RN) can be subdivided into a line-switching information region and packet information region, and in that the message information to be transmitted between subscriber device (SE) and switching device (VE) is transmitted in the line-switching information region and the signalling information is transmitted in the packet information region.

## Revendications

1. Système de communication comportant
un dispositif numérique de commutation (VE)
- qui est muni d'un système de bus local (LB1), par lequel un dispositif central de commande (ZST) communique avec un dispositif à réseau de connexion (SWE) réalisé sous la forme d'un circuit multiple à position temporelle, et avec au moins une unité de commande de communication (IOP),
- qui est muni d'un autre système de bus local (LB2), par lequel l'unité de commande de communication communique avec des dispositifs de raccordement d'abonnés disposés dans des dispositifs de réception (AE),
- qui comporte, dans le dispositif de réception (AE), un dispositif de répartition (VTE), qui répartit parallèlement, entre n bornes du dispositif de raccordement d'abonnés, aussi bien le système de bus qui provient de l'unité de commande de communication, qu'au moins un canal de transmission d'informations fonctionnant en mode MIC et provenant de bornes du dispositif à réseau de connexion (SWE)
- et aux dispositifs (SLM) de raccordement d'abonnés duquel respectivement m dispositifs d'abonnés peuvent être reliés par des lignes de raccordement mettant en oeuvre des procédés de transmission analogique ou numérique,
et un réseau en anneau (RN) retransmettant les informations par paquets,
- qui est inséré, en tant que réseau d'entrée, dans la zone du poste de raccordement d'abonné du dispositif de commutation,
- dans la ligne anneau (RL) duquel sont insérés plusieurs dispositifs de couplage en anneau (RCB), auxquels sont reliés, par l'intermédiaire de lignes de dérivation, des dispositifs (RN-ZE) d'accès au réseau en anneau
- et aux dispositifs (RN-ZE) d'accès au réseau en anneau duquel peut être relié respectivement au moins un dispositif d'abonné du réseau en anneau,
et des dispositifs matériels et des procédures logicielles dans les composants du système des deux réseaux de communication, à l'aide dasquels le système de communication est rendu opérant, est géré et est contrôlé,
caractérisé par le fait
- que, dans un dispositif de réception (AE), est disposé, à la place des dispositifs (SLM) de raccordement d'abonnés, un dispositif d'accès gateway (GWE) qui est formé d'un dispositif de conversion (UE-GW) et d'un dispositif (RN-ZE) d'accès au réseau en anneau et qui connecte le réseau de dispositifs de commutation au réseau en anneau (RN),
- que le dispositif d'accès gateway (GWE) est relié au dispositif de commutation (VE), par l'intermédiaire du dispositif de conversion (UE-GW), qui adapte les informations de signalisation et les informations de données aux procédures de raccordement du dispositif de raccordement d'abonnés,
- que le dispositif d'accès gateway (GWE) est relié au dispositif de couplage en anneau (RCB), par l'intermédiaire du dispositif (RN-ZE) d'accès au réseau en anneau, qui adapte les informations de signalisation et les informations de données aux procédures de retransmission des le réseau en anneau,
- que, dans le réseau en anneau (RN), est placé au moins un autre dispositif de couplage en anneau (RCB), auquel est associé, par l'intermédiaire d'une ligne de dérivation (SL), un dispositif externe de réception (AEE), qui est muni également d'un dispositif (RN-ZE) d'accès au réseau, d'un dispositif externe de conversion(UEE) et au maximum de n dispositifs (SLM) de raccordement d'abonnés,
- que les dispositifs externes d'abonnés (SE), qui peuvent être reliés aux dispositifs d'abonnés (SE) du réseau de dispositifs de commutation, sont reliés aux dispositifs (SLM) de raccordement d'abonnés, par l'intermédiaire de lignes de raccordement, et
- que le réseau en anneau (RN) et le réseau de dispositifs de commutation sont rendus opérants, sont gérés et sont contrôlés par le dispositif de commutation (VE) et/ou par le dispositif d'accès gateway (GWE).

2. Système de communication suivant la revendication 1, caractérisé par le fait que tous les composants de système du réseau en anneau (RN) et du réseau de dispositifs de commutation sont rendus opérants, sont gérés et sont contrôlés, d'une manière centralisée, par le dispositif de commutation (VE).

3. Système de communication suivant la revendication 1, caractérisé par le fait que, dans le dispositif d'accès gateway (GWE), tous les composants du réseau en anneau (RN) ainsi que le dispositif d'accès gateway (GWE), le dispositif d'adaptation (APE) les dispositifs externes (SLM) de raccordement d'abonnés, et le dispositif de commutation (VE) sont rendus opérants, sont gérés et sont contrôlés par le dispositif de commutation (VE).

4. Système de communication suivant la revendication 1, caractérisé par le fait que les dispositifs de couplage en anneau (RCB), les dispositifs (RN-ZE) d'accès au réseau en anneau placés dans le dispositif d'accès (GWE) gateway et les dispositifs de conversion (UE-GW, UEE) ainsi que les dispositifs externes (SLM) de raccordement d'abonnés et les composants de système du réseau de dispositifs de commutation sont rendus opérants, sont gérés et sont contrôlés par le dispositif de commutation (VE).

5. Système de communication suivant l'une des revendications précédentes, caractérisé par le fait que le dispositif d'accès gateway (GWE) représente, côté dispositif de commutation et en ce qui concerne les interfaces d'adressage et de signalisation et les interfaces physiques, un dispositif (SLM) de raccordement d'abonnés à n x m bornes de dispositifs d'abonnés.

6. Système de communication suivant la revendication 1, 2, 3 ou 4, caractérisé par le fait que le dispositif d'accès gateway (GWE) représente, côté dispositif de commutation et en ce qui concerne les interfaces d'adressage et de signalisation et les interfaces physiques, n dispositifs (SLM) de raccordement d'abonnés comportant respectivement m dispositifs d'abonnés raccordés (SE), et que le dispositif d'adaptation (APE) représente, côté dispositif de raccordement d'abonné, un dispositif de répartition (VTE) du dispositif de commutation (VE).

7. Système de communication suivant la revendication 1, caractérisé par le fait que la capacité de transmission d'informations des réseaux en anneau (RN) peut être subdivisée en une zone d'informations d'interconnexion directe et en une zone d'informations en paquets et que les informations de données, qui doivent être transmises entre un dispositif d'abonné (SE) et un dispositif de commutation (VE), sont retransmises dans la zone d'informations d'interconnexion et que les informations de signalisation sont retransmises dans la zone d'informations en paquets.
